# EUROPÄISCHE PATENTSCHRIFT

(11) **EP 2 092 222 B1**
(45) Veröffentlichungstag und Bekanntmachung des Hinweises auf die Patenterteilung: **06.07.2011**
(21) Anmeldenummer: 07820406.2
(22) Anmeldetag: 20.09.2007
(51) Int. Cl.: F16K 11/074, F16K 27/04

(54) **VENTIL ZUR STEUERUNG VON VOLUMENSTRÖMEN**
VALVE FOR CONTROLLING VOLUMETRIC FLOWS
VANNE DE COMMANDE DE DÉBITS VOLUMÉTRIQUES

(30) Priorität: 13.11.2006 DE 102006053311
(43) Veröffentlichungstag der Anmeldung: 26.08.2009
(73) Patentinhaber: Robert Bosch GmbH, 70442 Stuttgart (DE)
(72) Erfinder: MOENCH, Jochen, 76547 Sinzheim (DE); REEB, Georg, 77815 Buehl Eisental (DE); SCHMIDT, Roland, 77815 Buehl (DE); TEMPEL, Juergen, 76530 Baden-Baden (DE); URLAUB, Sven, 77839 Lichtenau (DE); HILS, Alois, 77880 Sasbach (DE)
(86) Internationale Anmeldenummer: PCT/EP2007/059968
(87) Internationale Veröffentlichungsnummer: WO 2008/058792

(56) Entgegenhaltungen:
- WO-A-02/086362
- WO-A-2006/095088
- DE-A1- 10 061 184
- DE-A1- 10 222 758
- GB-A- 1 170 463
- US-A- 4 438 781
- US-A1- 2006 102 863

## Beschreibung

Die Erfindung betrifft ein Ventil zur Steuerung von Volumenströmen in einem Heiz- und/oder Kühlsystem eines Kraftfahrzeuges, insbesondere ein Volumenstromregelventil nach dem Oberbegriff des Anspruchs 1, sowie einen Heiz- und/oder Kühlkreislauf eines Kraftfahrzeuges mit einem derartigen Ventil.

### Stand der Technik

Ein Kühl- bzw. Heizkreislauf eines Kraftfahrzeuges beinhaltet in der Regel eine zu kühlende Wärmequelle, beispielsweise den Fahrzeugmotor, die mittels eines Kühlmediums durch freie oder erzwungene Konvektion gekühlt werden soll. Die Temperaturdifferenz über der Wärmequelle ist vom Wärmeeintrag und von der Größe des Volumenstroms des Kühlmittels abhängig, während die absolute Temperatur des Kühlmediums durch den Wärmeeintrag der Wärmequelle, die Wärmeabfuhr über etwaige, im Kühlkreislauf befindliche Kühlerelemente und die Wärmekapazitäten der beteiligten Materialien bestimmt wird.

Um einerseits den Verbrennungsmotor eines Kraftfahrzeuges vor dem Überhitzen zu schützen und andererseits die Abwärme des Verbrennungsmotors, beispielsweise zur Heizung des Fahrgastraumes nutzen zu können, wird in Kraftfahrzeugen ein Kühlmittel umgepumpt, das die überschüssige Wärmeenergie des Motors aufnimmt und in gewünschtem Maße abführen kann. Der Heiz- bzw. Kühlkreislauf eines Kraftfahrzeuges umfasst in der Regel verschiedene Teilkreisläufe, wie beispielsweise einen Kühler-Zweig, eine Bypass-Zweig und/oder auch einen Heizungswärmetauscher-Zweig. Über einen im Kühlerzweig angeordneten Kühler oder Radiator kann die überflüssige Wärmemenge des Kühlmittels an die Umgebungsluft abgegeben werden. Ein Heizungswärmetauscher macht andererseits die zur Verfügung stehende Wärmemenge des Kühlmittels zur Beheizung des Fahrgastraumes nutzbar.

Die Verteilung des Kühlmittelstromes auf die verschiedenen Zweige eines Kühl- bzw. Heizkreislaufes eines Kraftfahrzeuges wird dabei über zumindest ein Ventil gesteuert. Die gewünschte Kühlmitteltemperatur wird durch Mischen eines gekühlten und eines ungekühlten Kühlmittelstromes eingestellt. So erfolgt die Regelung des Mischverhältnisses zwischen dem Kühler- und dem Bypass-Zweig bisher zumeist mit Hilfe eines dehnstoffgetriebenen, auf die Kühlmitteltemperatur reagierenden Thermostatventils. Darüber hinaus bekannt sind motorgetriebene Mischventile.

In der US 4,930,455 wird ein Drehklappenventil für den Fahrzeugbereich vorgestellt, das durch einen Elektromotor angesteuert wird. Dieses Ventil in der Art eines Butterfly- oder auch Schmetterlingsventil regelt den relativen Volumenstrom durch den Kühlkreislauf in Abhängigkeit eines elektrischen Steuersignals, welches im beschriebenen Fall aus der Kühlwassertemperatur abgeleitet wird.

Aus der US 5, 950, 576 ist ein Proportionalkühlmittelventil bekannt, dessen Ventilkörper scheibenförmig ausgebildet ist und eine Mehrzahl von Durchtrittsöffnungen aufweist, die es erlauben, die gewünschten Verbindungen zwischen dem Einlasskanal des Ventils und mehreren Auslasskanälen herzustellen. Der scheibenförmige Ventilkörper der US 5, 950, 576 wird mittels einer Welle über einen elektromechanischen Aktuator entsprechend den Vorgaben eines Verbrennungsmotor-Steuergerätes gestellt.

Die Dokumente WO 02/086 362, DE 100 61 184 und WO 2006/095088 offenbaren ein Ventil nach dem Oberbegriff des Anspruchs 1.

### Offenbarung der Erfindung

Das erfindungsgemäße Regelventil zur Steuerung von Volumenströmen in einem Heiz- und/oder Kühlsystem eines Kraftfahrzeuges ist in vorteilhafter Weise nicht an die Kühlfluidtemperatur gekoppelt, sondern kann im Gegensatz zu den weit verbreiteten Thermostatventilen durch seinen Stellantrieb unabhängig von der Temperatur des Kühlfluids geregelt werden. Insbesondere ermöglicht das erfindungsgemäße Ventil eine Regelung des Volumenstroms entsprechend den verbrennungsmotorisch relevanten Kenngrößen. Somit ist die Kühlleistungsanforderung des Kühlsystems für einen Verbrennungsmotor an das durch den Verbrennungsprozess erforderliche Leistungsniveau anpassbar und insbesondere unabhängig vom Kühlsystemzustand.

In vorteilhafter Weise ist bei dem erfindungsgemäßen Ventil ein Getriebe vorgesehen, welches eine Wirkverbindung zwischen dem elektromotorischen Antrieb des Ventils und dem zu stellenden, insbesondere scheibenförmigen ,Ventilkörper herstellt.

Durch die in den abhängigen Ansprüchen aufgeführten Merkmale sind vorteilhafte Weiterbildungen des erfindungsgemäßen Ventils möglich.

Das Getriebe, welches die Wirkverbindung zwischen dem zu stellenden Ventilkörper und einem elektromotorischen Antrieb für das Ventil vermittelt, ist in vorteilhafter Weise als Spindeltrieb, beispielsweise insbesondere als Schneckentrieb ausgebildet.

Der Spindeltrieb bzw. Scheckentrieb ist dabei mit der Abtriebswelle des elektromotorischen Antriebs des Ventils verbunden. So kann beispielsweise der Spindeltrieb in Form eines Schneckentriebes direkt einstückig mit bzw. an der Welle eines Elektromotors ausgebildet sein.

Der Spindeltrieb, also beispielsweise ein Schneckentrieb, kämmt dabei mit einem Stirn- bzw. Schraubrad, welches mit dem Ventilkörper, insbesondere der Antriebswelle des Ventilkörpers verbunden ist.

In vorteilhafter Weise ist das erfindungsgemäße Ventil als Scheibenventil ausgebildet und besitzt einen um die Achse einer Antriebswelle drehbar angeordneten, scheibenförmigen Ventilkörper, der im Wesentlichen senkrecht zur Achse der Antriebswelle des Ventilkörpers geht. Bei einer derartigen vorteilhaften Ausbildung des erfindungsgemäßen Ventils kann das Stirn- bzw. Schraubrad beispielsweise einstückig mit der Antriebswelle des Ventilkörpers bzw. auch einstückig mit dem Ventilkörper selbst ausgebildet sein. Alternativer Weise kann das Stirn- bzw. Schraubrad des Schnecken-Schraubrad-Getriebes des erfindungsgemäßen Ventils auch auf die Antriebswelle des Ventilkörpers aufgepresst sein.

In vorteilhafter Weise ist die Achse des Spindeltriebes, also beispielsweise die Achse des Schneckentriebes, um einen von 90° abweichenden Achswinkel zur Achse der Antriebswelle des Ventilkörpers angeordnet. Dabei sind insbesondere für das Schneckengetriebe Winkel ungleich 0° von Vorteil und zu realisieren. Das Schnecken- bzw. Schnecken-Schraubrad-Getriebe des erfindungsgemäßen Ventils wird dazu in vorteilhafter Weise so ausgeführt, dass durch die Schrägstellung des Schneckenantriebes ein geradverzahntes Stirn- bzw. Schraubrad zum Einsatz kommen kann. Dazu wird der Steigungswinkel (Gang) der Schnecke des Schneckentriebes so gewählt, dass er exakt der Summe aus dem Achswinkel und 90° entspricht. Auf diese Weise wird das Auftreten axialer Lagerkräfte für das Stirnrad vermieden und eine drehfreie Montage des Stirnrades ermöglicht. Aufgrund der bei gleicher Präzision einfacheren Herstellbarkeit sind die Kosten eines geradverzahnten Stirn- bzw. Schraubrades geringer, als die eines schrägverzahnten Stirnrades. Zudem lässt sich ein geradverzahntes Stirnrad leichter vermessen, so dass auch hinsichtlich der durchzuführenden Qualitätskontrollen das Getriebe für das erfindungsgemäße Ventil einen Vorteil bietet.

Die erfindungsgemäße Ausgestaltung des Getriebes als ein Schnecken- oder Schnecken-Schraubrad-Getriebe, bei dem der Ventilkörper, also beispielsweise eine Drehscheibe mit dem Schnecken- bzw. Schraubrad z. B. über eine Welle verbunden ist, eröffnet die Möglichkeit, Partikel, die sich in der Kühlflüssigkeit befinden, über die Wellendichtung bzw. Wellenlagerung vom Getriebe fern zu halten. In vorteilhafter Weise ist das Getriebe des erfindungsgemäßen Ventils als ein nasslaufendes Getriebe ausgebildet, so dass dieses im Betrieb des Ventils von dem zu regulierenden Volumenstrom umspült ist. Die Kombination Schnecke/Schraubrad hat gegenüber einem Stirnrad- oder Planetenradsystem beim Nasslauf Vorteile, das sich die Zahnzwischenräume - auf den Zahn des Stirnrades bezogen - von innen nach außen verengen, so dass das Fluid von innen nach außen in beide Richtungen verdrängt wird und darüber hinaus nur geringe Strömungsgeschwindigkeiten entstehen. Damit bleiben die hydrodynamischen Verluste gering. Zusätzlich wird bei einem Schnecken-Schraubrad-Getriebe durch die seitlich zum Zahn des Stirnrads erfolgende Drehbewegung der Schnecke die Wahrscheinlichkeit verringert, dass in dem Fluid vorhandene Partikel in den Kontakt zwischen den beiden Zahnrädern eingeklemmt werden und somit zu einem erhöhten Verschleiß beitragen könnten. Zu der Unempfindlichkeit der Schnecken-Schraubrad-Kombination gegenüber einem Einklemmen von Partikeln trägt auch bei, dass keine große Berührfläche zwischen den Getriebeelementen entsteht, sondern im Idealfall nur eine Punktlast erzeugt wird.

Der Ventilkörper ist über ein nasslaufendes Getriebe mit dem elektromotorischen Antrieb verbunden. Dieser Antrieb ist ebenfalls nasslaufend ausgeführt. Dazu ist das Getriebe von einem bürstenlosen Gleichstrommotor angetrieben, dessen Rotor im Betrieb des Ventils in der zu regelnden Kühlflüssigkeit läuft. Dabei bilden das Regelelement, also der Ventilkörper und vorzugsweise ein axial an dem Regelelement angefedertes Dichtelement eine Barriere zur Reinhaltung des nasslaufenden Getriebebereichs gegenüber Feststoffen, wie beispielsweise Formsandrückständen, die sich im Kühlmedium aufgrund des Herstellungs-prozesses der Verbrennungsmotorenkomponenten wieder finden. Darüber hinaus wird das nasslaufende Getriebe über die Wellenlagerung vor Verschmutzung geschützt.

Bei einer alternativen Ausführung lässt sich die Dichtfunktion auch in Form einer Gleitringabdichtung unter Einbeziehung des Regelelementes, d. h. des Ventilkörpers als Gleitpartner gestalten. In diesem Fall wäre das Getriebe als trockenlaufendes Getriebe zu bezeichnen.

Die Abdichtung des Neben- bzw. des Hauptkreislaufes erfolgt ebenfalls über eine hydrodynamische Abdichtung zwischen zwei aufeinander rotierenden Gleitpartnern in Verbindung mit eine hydrostatischen Vorspannung, so dass die Leckage-Raten bei geschlossenem Kühlkreislauf nahezu Null sind. Die beiden Kreisläufe, Neben-(Bypass, Heizung, etc) und Hauptkreislauf (Wärmetauscher) können sowohl eintrittsseitig wie austrittsseitig an dem Ventil angeordnet sein.

Mit dem erfindungsgemäßen Ventil ist die Realisierung eines vorteilhaften Heiz- und/oder Kühlkreislauf für ein Kraftfahrzeug möglich, das insbesondere eine Regelung unabhängig von der Kühlmediumstemperatur gestattet. Damit können in vorteilhafter Weise die Kühlleistungsanforderung an das durch den Verbrennungsprozess des Kraftfahrzeugmotors erforderliche Leistungsniveau angepasst werden.

Weitere Vorteile des erfindungsgemäßen Ventils bzw. eines Heiz- und/oder Kühlsystems mit einem derartigen Ventil ergeben sich aus der nachfolgenden Beschreibung eines Ausführungsbeispiels.

### Zeichnung

In der Zeichnung ist ein Ausführungsbeispiel für das erfindungsgemäße Ventil, sowie für einen Heiz- und/oder Kühlkreislauf eines Kraftfahrzeuges dargestellt, welche in der nachfolgenden Beschreibung näher erläutert werden sollen. Die Figuren der Zeichnung, deren Beschreibung sowie die Ansprüche enthalten zahlreiche Merkmale in Kombinationen. Ein Fachmann wird diese Merkmale auch einzeln betrachten und zu weiteren sinnvollen Kombinationen zusammenfassen. Insbesondere wird ein Fachmann auch Merkmale aus unterschiedlichen Ausführungsformen zu weiteren sinnvollen Kombinationen zusammenfassen, jedoch im Rahmen der beigefügten Ansprüche.

Es zeigen:
- Figur 1: ein erstes Ausführungsbeispiel eines erfindungsgemäßen Ventils in einer Übersichtdarstellung,
- Figur 2: eine Schnittzeichnung durch die Darstellung des Ventils nach der Figur 1,
- Figur 3: eine Detaildarstellung eines weiteren Schnitts durch ein erfindungsgemäßes Ventil, insbesondere im Bereich des Getriebes,
- Figur 4: eine Detaildarstellung des Getriebes des erfindungsgemäßen Ventils in der Form eines Schneckentriebes,
- Figur 5: eine weitere Detaildarstellung eines erfindungsgemäßen Getriebes,
- Figur 6: einen Heiz- und / oder Kühlkreislauf mit einem erfindungs-gemäßen Ventil.

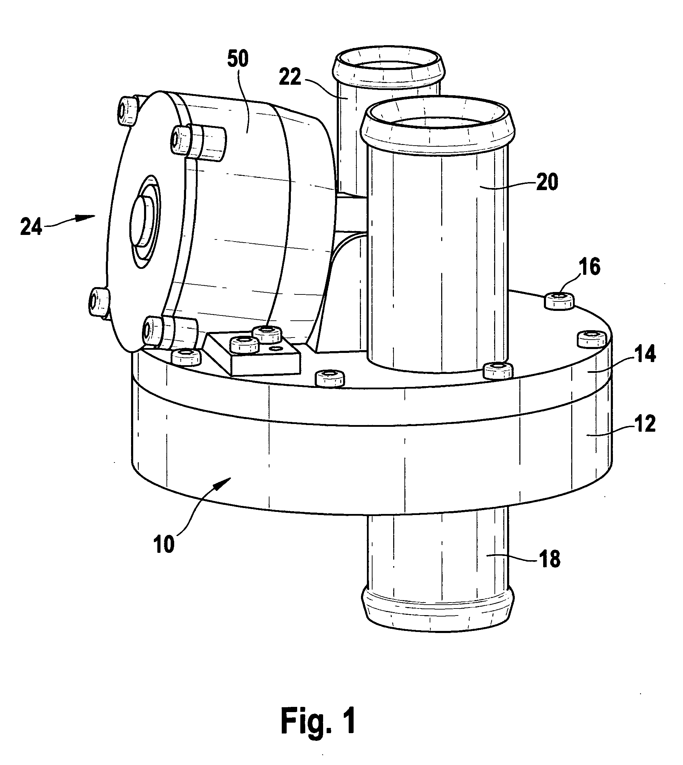

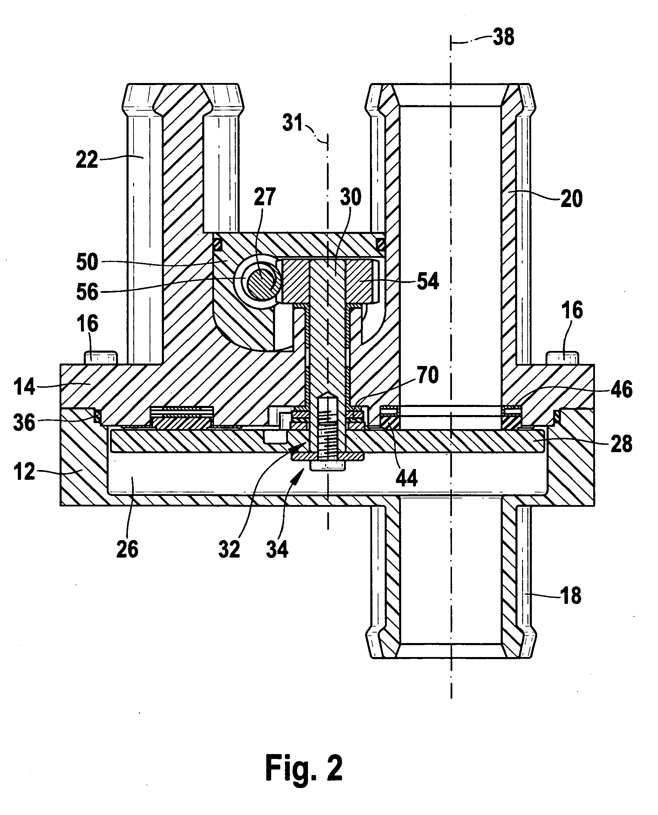

Figur 1 zeigt ein Beispiel für ein erfindungsgemäßes Ventil in einer Übersichtsdarstellung. Das erfindungsgemäße Ventil gemäß der Ausführungsform in Figur 1 besitzt ein Gehäuse 10, mit einem Gehäuseunterteil 12, sowie einem Gehäuseoberteil 14, die über Verbindungsmittel 16, beispielsweise Schrauben, Nieten oder Rastmittel, fluiddicht miteinander verbunden sind. Insbesondere das Gehäuseunterteil 12 ist im Wesentlichen topfförmig ausgebildet, wie dies insbesondere in Figur 2 dargestellt ist, und ermöglicht in seinem Inneren die Ausbildung einer Ventilkammer zur Aufnahme eines Ventilelementes bzw. Ventilkörpers. Das Gehäuseoberteil 14 kann ebenfalls topfförmig ausgebildet sein bzw. lediglich als eine Art Deckel am Gehäuseunterteil 12 angeformt sein. Am Gehäuseunterteil 12 angeformt ist der Stutzen 18 eines Einlasskanals. Der Einlasskanal bzw. der Stutzen 18 kann dabei insbesondere einstückig mit dem Gehäuseunterteil ausgeformt, beispielsweise in Kunststoff ausgebildet sein.

Mit dem Gehäuseoberteil verbunden ist ein erster Auslasskanal 20, sowie ein zweiter Auslasskanal 22. Mit Hilfe eines in der Ventilkammer angeordneten und noch näher zu beschreibenden Ventilelementes kann eine Verbindung zwischen dem Einlasskanal und dem ersten Auslasskanal bzw. zwischen dem Einlasskanal und dem zweiten Auslasskanal geöffnet, geschlossen und in gewünschter Weise variiert werden.

Darüber hinaus weist das erfindungsgemäße Ventil noch einen Stellantrieb 24 zur Verstellung des Ventilelementes auf. Der Stellantrieb 24 in Form eines noch zu beschreibenden Elektromotors nebst einem Getriebe ist im Ausführungsbeispiel des erfindungsgemäßen Ventils nach Figur 1 an dem Gehäuse 10 befestigt. Der Elektromotor gemäß der Ausführungsform des Ventils nach der Figur 1 besitzt ein eigenes Gehäuse 50 und ist mit dem Gehäuse 10 des Ventils verschraubt. In alternativen Ausführungsformen kann der Elektromotor auch direkt in dem Gehäuse 10, beispielsweise im Gehäuseunterteil 12 bzw. Gehäuseoberteil 14 des Ventils angeordnet sein. Aus dem Gehäuse 50 des Stellantriebs 24 tritt die Antriebswelle 27 des Elektromotors aus, die über ein Getriebe mit der Abtriebswelle des Ventilkörpers des erfindungsgemäßen Ventils gekoppelt ist. In noch zu beschreibender Weise ist bei dem erfindungsgemäßen Ventil die Antriebswelle 27 des Elektromotors in einem Winkel ungleich 90° zur Abtriebswelle des Ventilkörpers angeordnet.

Figur 2 zeigt einen Schnitt durch das erfindungsgemäße Ventil gemäß Figur 1, der in etwa senkrecht zur Zeichnungsebene der Figur 1 verläuft.

In der zwischen dem Gehäuseunterteil 12 und dem Gehäuseoberteil 14 ausgebildeten Ventilkammer 26 ist ein scheibenförmiger Ventilkörper 28 angeordnet. Eine Abtriebswelle 30 des Ventilelementes greift in eine zentrale Öffnung des scheibenförmigen Ventilkörpers 28 ein. Durch entsprechende Sicherungsmittel 34 ist der Ventilkörper 28 drehfest auf der Abtriebswelle 30 befestigt. Dies kann beispielsweise durch eine Verschraubung bzw. Verrastung erfolgen, oder aber auch durch ein Verpressen der Abtriebswelle 30 in der zentralen Öffnung 32 des Ventilkörpers 28. Eine Getriebeverbindung zwischen der Abstriebswelle 30 des Ventilkörpers 28 und dem antreibenden Elektromotor gewährleistet die exakte Verstellung des Ventilkörpers über den elektromotorischen Antrieb. Die erfindungsgemäße Ausgestaltung des Getriebes wird im Detail weiter unten noch beschrieben werden.

Zwischen dem Gehäuseunterteil 12 und dem Gehäuseoberteil 14 sind Dichtmittel, beispielsweise ein Dichtring 36 vorgesehen, um eine fluiddichte Verbindung zwischen den beiden Gehäuseteilen des Ventilgehäuses 10 zu gewährleisten. Im Ausführungsbeispiel der Figur 1 bzw. Figur 2 ist der Einlasskanal 18 fluchtend auf einer gemeinsamen Achse 38 mit dem ersten Auslasskanal 20 angeordnet, die Antriebswelle 30 entlang einer dazu parallel ausgerichteten Achse 31.

Der Ventilkörper 28 besitzt neben seiner zentralen Öffnung zur Aufnahme bzw. Befestigung der Abtriebswelle 30 als Durchgangsöffnung ausgebildete Regelkonturen für den ersten bzw. zweiten Auslasskanal des Ventils. In Abhängigkeit von der Drehstellung des Ventilkörpers 28 geben die Regelkonturen einen mehr oder weniger großen Querschnitt zum ersten bzw. zweiten Auslasskanal frei. Ein durch den Einlasskanal 18 einströmendes Fluid gelangt somit über die Ventilkammer 26 durch die Regelkontur in den ersten Auslasskanal 20 bzw. in den zweiten Auslasskanal 22.

Die Abdichtung des Ventilinneren und insbesondere die Abdichtung des ersten bzw. zweiten Auslasskanals erfolgt über eine hydrodynamische Abdichtung zwischen zwei aufeinander rotierenden Gleitpartnern in Verbindung mit einer hydrostatischen Vorspannung, so dass die Leckageraten bei geschlossenem Kühlkreislauf nahezu Null sind. Dazu besitzt das erfindungsgemäße Ventil axial an dem Regelelement, also dem Ventilkörper 26, angefederte Dichtelemente 44. Die Dichtelemente in Form von Dichtringen, die in Figur 2 lediglich im ersten Auslasskanal 20 dargestellt sind, werden durch Federelemente 46, die beispielsweise ebenfalls durch eine ringförmige Feder realisiert sein können, an den Ventilkörper angedrückt und dichten diesen somit gegenüber im Gehäuseinnenraum ab.

In vorteilhafter Weise sind der Ventilkörper 28 sowie die Dichtelemente 44 aus Material gleicher oder vergleichbarer Härte hergestellt, um einen gegenseitigen Abrieb dieser Elemente zu vermeiden bzw. möglicht gering zu halten. In vorteilhafter Weise kann der scheibenförmige Ventilkörper 28 aus Kunststoff oder einem Keramikmaterial ausgebildet sein. Andere Materialien, wie beispielsweise beschichtete oder legierte Metalle oder Stähler oder vergleichbare Compounds sind aber ebenso möglich.

Der scheibenförmige Ventilkörper 28 des Ventils besitzt neben Regelkonturen bzw. für den ersten bzw. zweiten Auslasskanal und der zentralen Öffnung 32 für die Antriebeswelle eine weitere Durchtrittsöffnung, die als Massenausgleichselement zum Unwuchtausgleich des um die Achse 31 der Antriebswelle 30 rotierbaren scheibenförmigen Ventilkörpers 28 dient. Prinzipiell können die Mittel zum Unwuchtausgleich des scheibenförmigen Ventilkörpers 28 jedoch auch andersartig ausgeführt sein. Die Mittel zum Unwuchtausgleich können prinzipiell auch durch Materialabtrag bzw. Materialauftrag, insbesondere an der Ventilscheibe realisiert werden. Insbesondere für den Materialauftrag bietet sich bei einer Ausführungsform gemäß Figur 2 die dem Einlasskanal 18 zugewandte Seite der Ventilscheibe an.

An dem dem Ventilkörper 28 entgegengesetzten Ende der Antriebswelle 30 ist ein Stirn- oder Schraubrad 54 auf der Antriebswelle 30 des Ventilkörpers 28 befestigt. Dieses Schraubrad 54 kann beispielsweise auf die Antriebswelle 30 aufgepresst sein bzw. in alternativen Ausführungsformen auch einstückig mit der Welle 30 ausgebildet sein. Insbesondere im Falle einer Kunststoffwelle ist es vorteilhaft, das Schraubrad 54 direkt mit der Welle 30 auszubilden. Das Schraubrad 54 kämmt mit der Schnecke 56 eines als Schneckentrieb ausgebildeten Spindeltriebs, der mit der Abtriebswelle 27 des antreibenden Elektromotors verbunden ist.

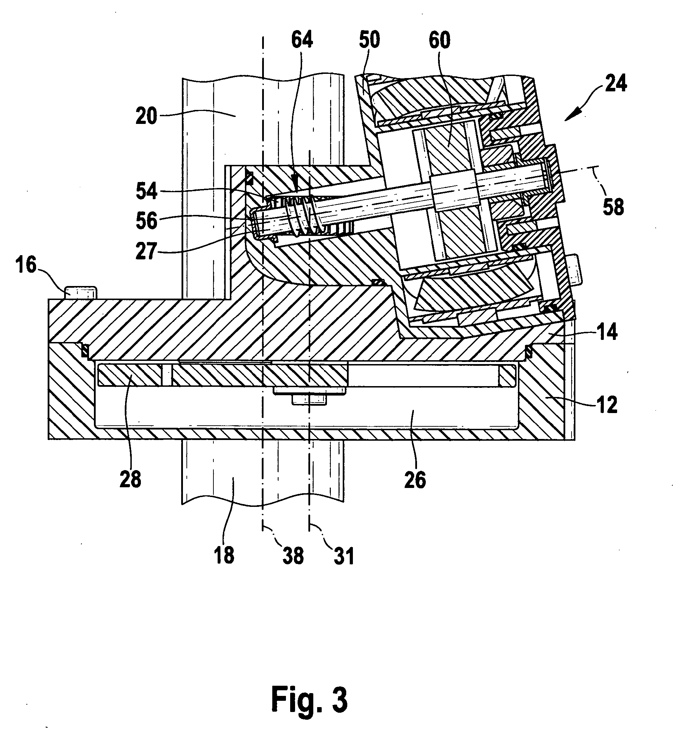

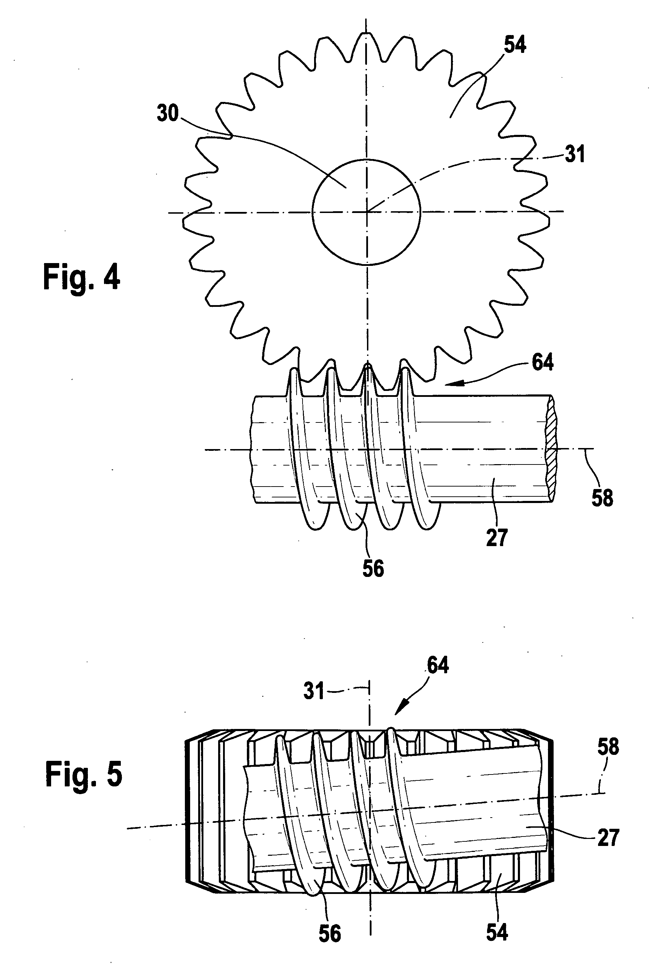

Das Schnecken- bzw. Schnecken-Schraubrad-Getriebe 32 des erfindungsgemäßen Ventils ist dabei in vorteilhafter Weise so ausgeführt, dass durch die Schrägstellung des Schneckenantriebs (der Achswinkel ist ungleich 90°) ein geradverzahntes Stirnrad 54 zum Einsatz kommen kann (siehe hierzu insbesondere die Detaildarstellungen in Figur 4 bzw. Figur 5). Dazu wird der Schrägungs- bzw. Steigungswinkel der Schnecke 56 so gewählt, dass er möglichst exakt der Summe aus dem Achswinkel und einem rechten Winkel entspricht. Der Achswinkel ist dabei definiert, als Winkel zwischen der Achse des Spindeltriebes, im Ausführungsbeispiel gemäß Figur 2 somit der Achse 58 der Motorwelle 27 und der Achse 31 der Antriebswelle 30 des Ventilkörpers 28 (siehe hierzu auch Figur 3). Die Achse 31 der Antriebswelle 30 des Ventilkörpers 28 ist dabei in vorteilhafter Weise parallel zu den fluchtenden Achsen 38 von Eintritts- 18 und Austrittskanal 20 angeordnet.

Figur 3 zeigt die relative Orientierung dieser Achsen in einer Detaildarstellung des erfindungsgemäßen Ventils. Die Antriebswelle 27 des antreibenden Elektromotors verläuft unter einem Winkel ungleich 90° zur Abtriebswelle 30 des Ventilelementes 28, die in Figur 3 durch ihre Achse 31 kenntlich ist. Auf die Antriebswelle 27 des elektromotorischen Antriebs aufgesetzt, bzw. aus dieser herausgebildet ist die Schnecke 56, die mit dem in Figur 3 angedeuteten Schraubrad 54 kämmt.

Die Realisierung des Getriebes 64 in Form einer Kombination Schnecke/Schraubrad hat insbesondere Vorteile für den Nasslaufberieb des Getriebes, da die Zahnzwischenräume, wie in Figur 3 bzw. Figur 4 zu sehen ist - auf den Zahn des Stirnrades bezogen - von innen nach außen sich verengen, so dass das Fluid von innen nach außen in beide Richtungen verdrängt wird und somit nur geringe Strömungsgeschwindigkeiten entstehen. Damit bleiben die hydrodynamischen Verluste am Getriebe gering. Zusätzlich wird bei dem erfindungsgemäßen Schnecken-Schraubenrad-Getriebe durch die seitlich zum Zahn des Stirnrads erfolge Drehbewegung der Schnecke die Wahrscheinlichkeit gering, dass in dem Fluid vorhandene Partikel in den Kontakt zwischen den beiden kämmenden Zahnrädern eingeklemmt werden und somit zu einem erhöhten Verschleiß beitragen könnten. Diese Unempfindlichkeit des Schnecken-Schraubrad-Getriebes gegenüber dem Einklemmen von Partikeln resultiert darüber hinaus auch daher, dass keine großen Berührflächen entstehen, sondern im Idealfall nur eine Punktlast zwischen den Zahnrädern erzeugt wird.

Wie in Figur 3 bzw. Figur 4 nochmals im Detail dargestellt ist, wird das Schnecken-Schraubrad-Getriebe 64 in vorteilhafter Weise so ausgeführt, dass durch die Schrägstellung des Schneckentriebs 56 ein geradverzahntes Stirnrad 54 zum Einsatz kommen kann. Dazu wird der Schrägungs- bzw. Steigungswinkel der Schnecke 56 so gewählt, dass er exakt der Summe aus dem Achswinkel und 90° entspricht. Damit wird das Auftreten axialer Lagerkräfte für das Stirnrad vermieden und eine verdrehfreie Montage des Stirnrades 54 ermöglicht.

Das erfindungsgemäße Getriebe ist in vorteilhafter Weise als nasslaufendes Getriebe mit einem ebenfalls nasslaufenden elektromotorischen Antrieb verbunden. Dabei bilden der Ventilkörper 28 und ein vorzugsweise axial an dem Ventilkörper angefedertes Dichtelement 70 eine Barriere zur Reinhaltung des nasslaufenden Getriebebereichs gegenüber Feststoffen, beispielsweise Formsand, wie dies der Figur 2 zu entnehmen ist.

Der Rotor 60 eines solchen nasslaufenden Antriebes könnte beispielsweise ganz oder teilweise aus Se-Magneten bzw. einem Se-Magnetmaterial hoher Remanenz gebildet sein. Aus Gründen der Korrosionsbeständigkeit sollte das Se-Material dabei jedoch gekapselt sein.

Die Abdichtung des Ventilgehäuses gegenüber den Auslasskanälen erfolgt ebenfalls über eine hydrodynamische Abdichtung zwischen zwei aufeinander rotierenden Gleitpartnern in Verbindung mit einer hydrostatischen Vorspannung, so dass die Leckage-Raten bei geschlossenem Kühlkreislauf nahezu Null sein können.

Alternativ zu dem Schnecken-Schraubrad-Getriebe 64 könnte in dem erfindungsgemäßen Ventil auch eine Scheibe mit einer Außenverzahnung (gerade bzw. schräge Stirnradverzahnung, Konradverzahnung) verwendet werden, so dass dort ein Ritzel oder eine Schnecke angreifen kann. Auch in diesem Fall sollte der Achswinkel der beiden drehenden Teile nicht 90° betragen. In vorteilhafter Weise könnte beispielweise das scheibenförmige Ventilelement selbst als GetriebeElement, beispielsweise mittels eines umlaufenden Zahnkranzes ausgestaltet werden.

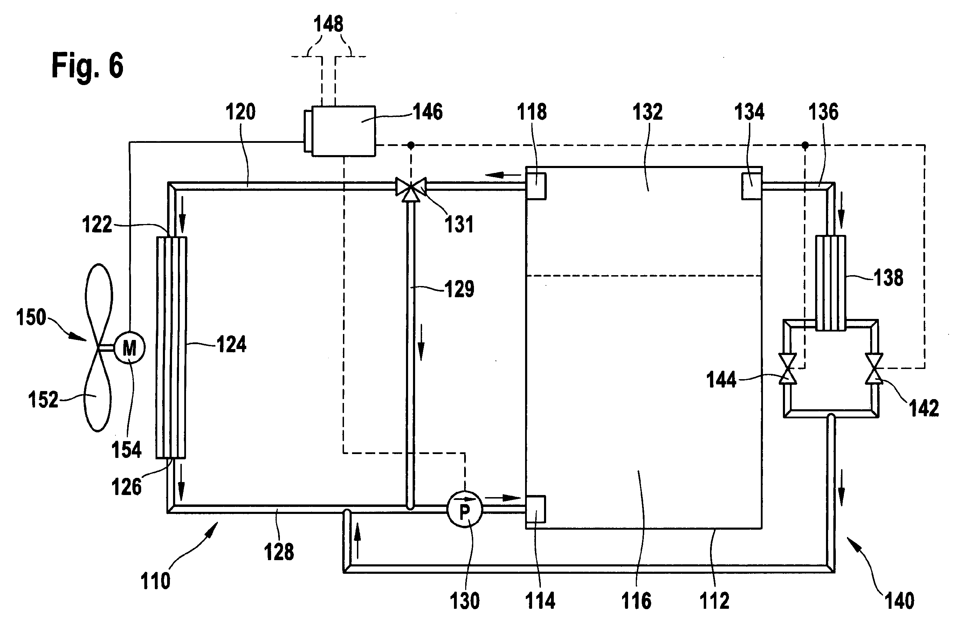

Figur 6 zeigt in vereinfachter, schematischer Darstellung ein Kühl- und Heizkreislauf 110 zur Kühlung eines Verbrennungsmotors 112 mit einem erfindungsgemäßen Kühlmittelsteuerventil 131. Der Verbrennungsmotor 112 verfügt über einen ersten Kühlmitteleinlass 114 im Bereich seines Motorblocks 116, sowie über einen ersten Kühlmittelauslass 118, der über eine Zulaufleitung 120 und einen Kühlereinlass 122 mit einem Kühler 124 des Kühlkreislaufs 110 verbunden ist. Der Kühler 124 ist wiederum über einen Kühlerauslass 126 und eine Verbindungsleitung 128 mit dem Kühlmitteleinlass 114 des Verbrennungsmotors 112 verbunden.

Zur Umwälzung des Kühlmittels im Kühlkreislauf 110 des Verbrennungsmotors 112 befindet sich in der Verbindungsleitung 128 eine Kühlmittelpumpe 130, die im Ausführungsbeispiel der Fig. 6 elektronisch geregelt ist. Rein mechanische Kühlmittelpumpen sind in anderen Ausführungsbeispielen für einen erfindungsgemäßen Kühl- und Heizkreislauf aber ebenso möglich.

Im Bereich des Zylinderkopfes 132 des Verbrennungsmotors 112 befindet sich ein zweiter Kühlmittelauslass 134 der über eine Verbindungsleitung 136 mit einem Heizungswärmetauscher 138 eines Heizungsteilzweiges 140 verbunden ist. In diesem Heizungszweig 140 wird ein Teil des aus dem Motor 112 austretenden, erwärmten Kühlmittels genutzt, um über den Heizungswärmetauscher 138, die im heißen Kühlmittel gespeicherte Wärmeenergie zur Beheizung, beispielsweise eines in Fig. 6 nicht weiter dargestellten Fahrzeuginnenraumes, zu nutzen. Die bedarfsgerechte Regelung der Heizfunktion ist in Fig. 6 schematisch nur durch die gesteuerten Heizungsventile 142 bzw. 144 angedeutet.

Von der Rücklaufleitung 120 des Kühl- und Heizkreislaufs 110 zweigt eine Bypassleitung 129 ab, die parallel zum Kühlerelement 124 verläuft und die Rücklaufleitung 120 direkt mit der Verbindungsleitung 128 zwischen dem Kühlerauslass 126 und dem Kühlmitteleinlass 114 des Motors verbindet. Zur Regelung der relativen Volumenströme durch das Kühlerelement 124 einerseits, beziehungsweise die Bypassleitung 129 andererseits, ist im dargestellten Ausführungsbeispiel eines Kühl- und Heizkreislaufs nach der Fig. 6 ein Dreiwege-Bypassventil 131 vorgesehen, welches von einem Steuergerät 146 angesteuert und geregelt wird. Das Bypassventil 131 ist dabei in der Art des erfindungsgemäßen Ventils nach den Figuren 1 bis 3 aufgebaut.

Die Heizungsventile 142 bzw. 144 des Heizungsteilzweiges 140 werden im Ausführungsbeispiel des Kühl- und Heizungskreislaufs 110 gemäß Fig. 4 ebenso wie das Bypassventil 131 über das Steuergerät 146 angesteuert und geregelt. Das Steuergerät 146, welches beispielsweise auch das Motorsteuergerät des Fahrzeugs sein kann, ist mit diversen Sensoren verbunden, die in Fig. 6 der Übersicht halber nicht dargestellt sind und lediglich durch elektrische Verbindungsleitungen 148 angedeutet sind. Über diese Sensoren werden dem Steuergerät 146 aktuelle Parameter des Kühlkreislaufs bzw. des Motors zugeleitet, die dann mit einer im Steuergerät abgelegten Bedatung verglichen werden können, um daraus entsprechende Stellgrößen für die aktiven Komponenten des Kühl- und Heizkreislaufs 110 zu ermitteln. Neben den Parametern des Kühlkreislaufs 110, wie beispielsweise der Kühlmitteltemperatur, wird auch die Motortemperatur, und insbesondere die Motortemperatur an verschiedenen temperaturkritischen Stellen des Motors, an das Steuergerät 146 übermittelt. Als weitere Eingangssignale für das Steuergerät können darüber hinaus auch der Kraftstoffverbrauch, sowie die Schadstoffemission des Verbrennungsmotors über entsprechende Sensoren an das Steuergerät übermittelt werden.

Das Steuergerät 146 dient im Ausführungsbeispiel der Fig. 6 gleichzeitig der bedarfsgerechten Ansteuerung eines Kühlgebläses 150, welches zur Erhöhung der Kühlleistung des Kühlsystems dem Kühler 124 des Kühlkreislaufs zugeordnet ist. Das Kühlgebläse 150 besteht aus einem Lüfter 152 und einem den Lüfter antreibenden Motor 154, der seine Ansteuerungsdaten und die Energieversorgung über entsprechende, elektrische Verbindungsleitungen vom Steuergerät 146 erhält. Darüber hinaus regelt das Steuergerät 146 unter Anderem auch die Leistung der Kühlmittelpumpe 130.

Im Speziellen wird vom Steuergerät 146 jeweils eine Stellgröße für die Aktuatoren der Ventile 131, 142 und 144 sowie weiterer, in der vereinfachten Darstellung eines Kühlkreislaufs nach Fig. 6 nicht dargestellter Ventile errechnet, um die aktuelle Motor-Ist-Temperatur auf eine optimale Motor-Soll-Temperatur einzuregeln. Die Ansteuerung der Aktuatoren der erfindungsgemäßen Ventile des Kühl- und Heizkreislaufs 110 geschieht derart, dass der durch die Ventile geregelte Volumenstrom möglichst linear proportional zu der Stellgröße für den jeweiligen Aktuator ist. Auf diese Weise lassen sich die Ventile in exakter Weise nach den Vorgaben des Steuergerätes stellen, so dass der Kühlmittelvolumenstrom sehr genau an die Vorgaben, beispielsweise eines in der Steuereinheit 146 abgelegten zeitabhängigen Temperaturmodels für den Motor angepasst werden kann. Zur Einstellung der optimalen Motortemperatur wird mit Hilfe der erfindungsgemäßen, steuerbaren Ventile der relative Kühlmittelvolumenstrom durch den Kühler 124 bzw. durch die Bypassleitung 129 geregelt. So kann beispielsweise in der Startphase des Motors 112 die Verbindungsleitung 120 zum Motorkühler 124 vollständig geschlossen werden und das erfindungsgemäße Bypassventil 131 in Richtung der Bypassleitung 129 gegebenenfalls vollständig oder aber auch nur geringfügig geöffnet werden. Auf diese Weise ist eine schnelle Erreichung der optimalen Arbeitstemperatur des Motors 112 möglich, so dass die Betriebsbedingungen des geringeren Kraftstoffverbrauchs sowie der geringeren Schadstoffemission des Motors frühzeitig erreicht werden können. Nach Erreichen der optimalen Motortemperatur wird die Kühlerzuleitung 120 durch das Bypassventil 131 geöffnet und die Bypassleitung 129 kann in entsprechendem Maße geschlossen werden, um die überschüssige, durch den Motor 112 erzeugte Wärmeenergie über das Kühlerelement 124 sowie das Kühlgebläse 150 an die Umgebung abgeben zu können. Ebenso ist es möglich, über das Bypassventil 131 sowohl die Bypassleitung 129, als auch die Zuleitung zum Kühler gleichzeitig vollständig zu verschließen.

Das erfindungsgemäße Ventil ist nicht auf die in der Beschreibung gezeigten Ausführungsformen beschränkt.

## Patentansprüche

1. Ventil zur Steuerung von Volumenströmen in einem Heiz- und/oder Kühlsystem eines Kraftfahrzeuges, mit einem Ventilgehäuse (10) von dem mindestens ein Einlass-Kanal (18) und mindestens ein Auslass-Kanal (20, 22) abzweigen, sowie mit zumindest einem, in dem Ventilgehäuse angeordneten, um die Achse (31) einer Antriebswelle (30) drehbaren, scheibenförmigen Ventilkörper (28) zur Volumenstromregelung, wobei der Ventilkörper (28) mittels eines Getriebes (64) mit einem elektromotorischen Antrieb (24) wirkverbunden ist, **dadurch gekennzeichnet, dass** das Getriebe (64) von einem bürstenlosen Gleichstrommotor angetrieben ist, wobei sowohl das Getriebe (64) als auch ein Rotor (60) des Gleichstrommotors im Betrieb von der zu regelnden Kühlflüssigkeit umspült sind.

2. Ventil nach Anspruch 1, **dadurch gekennzeichnet, dass** das Getriebe (64) einen Spindeltrieb (56) aufweist.

3. Ventil nach Anspruch 2, **dadurch gekennzeichnet, dass** der Spindeltrieb (56) mit der Antriebswelle (27) des elektromotorischen Antriebs (24) wirkverbunden, insbesondere verbunden ist.

4. Ventil nach Anspruch 2 und / oder 3, **dadurch gekennzeichnet, dass** der Spindeltrieb (56) mit einem Stirnrad (54) kämmt, welches mit dem Ventilkörper (28) oder der Antriebswelle (30) des Ventilgliedes (28) verbunden ist.

5. Ventil nach einem der vorhergehenden Ansprüche, **dadurch gekennzeichnet, dass** die Antriebswelle (30) des Ventilkörpers (28) im wesentlichen senkrecht zu einer Ebene des scheibenförmigen Ventilkörpers (28) angeordnet ist.

6. Ventil nach einem der vorhergehenden Ansprüche 2 bis 5, **dadurch gekennzeichnet, dass** die Achse (31) des Spindeltriebs (56) einen von 90° abweichenden Achswinkel zur Achse (58) der Abtriebswelle (27) des Ventilelkörpers (28) besitzt.

7. Ventil nach einem der vorhergehenden Ansprüche 2 bis 5, **dadurch gekennzeichnet, dass** der Spindeltrieb (56) als Schneckentrieb (56) ausgebildet ist.

8. Ventil nach Anspruch 5, **dadurch gekennzeichnet, dass** der Steigungswinkel des Scheckentriebs (56) gleich der Summe aus Achswinkel und 90° ist.

9. Ventil nach zumindest einem der Ansprüche 4 bis 7, **dadurch gekennzeichnet, dass** das Stirnrad (54) ein geradverzahntes Stirnrad ist.

10. Ventil nach Anspruch 1, **dadurch gekennzeichnet, dass** der Rotor zumindest teilweise aus einem Se-Magnetmaterial gebildet ist.

11. Ventil nach Anspruch 10, **dadurch gekennzeichnet, dass** das Se-Magnetmaterial des Rotors gekapselt ist.

12. Ventil nach Ansprüch 1, **dadurch gekennzeichnet, dass** der Ventilkörper (28) und zumindest ein an den Ventilkörper (28) angefedertes Dichtelement (44) eine Feststoffbarriere für im Volumenstrom vorhandene Feststoffe bilden.

13. Heiz- und/oder Kühlkreislauf eines Kraftfahrzeuges, in dem ein Kühlmittelfluid, insbesondere ein Kühlmittelfluid eines Verbrennungsmotors, zirkulieren kann, mit zumindest einem Ventil (131) nach zumindest einem der Ansprüche 1 bis 12.

## Claims

1. Valve for the control of volumetric flows in a heating and/or cooling system of a motor vehicle, with a valve housing (10), from which at least one inlet duct (18) and at least one outlet duct (20, 22) branch off, and with at least one disc-shaped valve body (28), arranged in the valve housing and rotatable about the axis (31) of a drive shaft (30), for volumetric flow regulation, the valve body (28) being operatively connected to an electromotive drive (24) by means of a gear (64), **characterized in that** the gear (64) is driven by a brushless direct-current motor, the cooling liquid to be regulated washing around both the gear (64) and a rotor (60) of the direct-current motor during operation.

2. Valve according to Claim 1, **characterized in that** the gear (64) has a spindle drive (56).

3. Valve according to Claim 2, **characterized in that** the spindle drive (56) is operatively connected, in particular connected, to the drive shaft (27) of the electromotive drive (24).

4. Valve according to Claim 2 and/or 3, **characterized in that** the spindle drive (56) meshes with a spur wheel (54) which is connected to the valve body (28) or to the drive shaft (30) of the valve member (28).

5. Valve according to one of the preceding claims, **characterized in that** the drive shaft (30) of the valve body (28) is arranged essentially perpendicularly to a plane of the disc-shaped valve body (28).

6. Valve according to one of the preceding Claims 2 to 5, **characterized in that** the axis (31) of the spindle drive (56) possesses an axial angle deviating from 90° to the axis (58) of the drive shaft (27) of the valve body (28).

7. Valve according to one of the preceding Claims 2 to 5, **characterized in that** the spindle drive (56) is designed as a worm drive (56).

8. Valve according to Claim 5, **characterized in that** the pitch angle of the worm drive (56) is equal to the sum of the axial angle and 90°.

9. Valve according to at least one of Claims 4 to 7, **characterized in that** the spur wheel (54) is a straight-toothed spur wheel.

10. Valve according to Claim 1, **characterized in that** the rotor is formed at least partially from an Se magnetic material.

11. Valve according to Claim 10, **characterized in that** the Se magnetic material of the rotor is encapsulated.

12. Valve according to Claim 1, **characterized in that** the valve body (28) and at least one sealing element (44) sprung onto the valve body (28) form a solids barrier for solids present in the volumetric flow.

13. Heating and/or cooling circuit of a motor vehicle, in which a coolant fluid, in particular a coolant fluid of an internal combustion engine, can circulate, with at least one valve (131) according to at least one of Claims 1 to 12.

## Revendications

1. Soupape pour la commande de débits volumétriques dans un système de chauffage et/ou de refroidissement d'un véhicule automobile, comprenant un boîtier de soupape (10) duquel partent au moins un canal d'entrée (18) et au moins un canal de sortie (20, 22), et comprenant au moins un corps de soupape (28) en forme de disque, pour la régulation du débit volumétrique, disposé dans le boîtier de soupape et pouvant tourner autour de l'axe (31) d'un arbre d'entraînement (30), le corps de soupape (28) étant en liaison fonctionnelle au moyen d'une transmission (64) avec un entraînement par moteur électrique (24), **caractérisée en ce que** la transmission (64) est entraînée par un moteur à courant continu sans balais, la transmission (64) ainsi qu'un rotor (60) du moteur à courant continu étant entourés en fonctionnement par le liquide de refroidissement à réguler.

2. Soupape selon la revendication 1, **caractérisée en ce que** la transmission (64) présente un entraînement à broche (56).

3. Soupape selon la revendication 2, **caractérisée en ce que** l'entraînement à broche (56) est en liaison fonctionnelle avec, notamment est relié à l'arbre d'entraînement (27) de l'entraînement par moteur électrique (24).

4. Soupape selon la revendication 2 et/ou 3, **caractérisée en ce que** l'entraînement à broche (56) s'engrène avec un pignon droit (54) qui est relié au corps de soupape (28) ou à l'arbre d'entraînement (30) de l'organe de soupape (28).

5. Soupape selon l'une quelconque des revendications précédentes, **caractérisée en ce que** l'arbre d'entraînement (30) du corps de soupape (28) est disposé essentiellement perpendiculairement à un plan du corps de soupape (28) en forme de disque.

6. Soupape selon l'une quelconque des revendications 2 à 5, **caractérisée en ce que** l'axe (31) de l'entraînement à broche (56) possède un angle d'axe s'écartant de 90° de l'axe (58) de l'arbre de sortie (27) du corps de soupape (28).

7. Soupape selon l'une quelconque des revendications 2 à 5, **caractérisée en ce que** l'entraînement à broche (56) est réalisé sous forme d'entraînement à vis sans fin (56).

8. Soupape selon la revendication 5, **caractérisée en ce que** l'angle d'inclinaison de l'entraînement à vis sans fin (56) est égal à la somme de l'angle d'axe plus 90°.

9. Soupape selon au moins l'une quelconque des revendications 4 à 7, **caractérisée en ce que** le pignon droit (54) est un pignon droit à denture droite.

10. Soupape selon la revendication 1, **caractérisée en ce que** le rotor est formé au moins en partie d'un matériau magnétique à base de Se.

11. Soupape selon la revendication 10, **caractérisée en ce que** le matériau magnétique à base de Se du rotor est encapsulé.

12. Soupape selon la revendication 1, **caractérisée en ce que** le corps de soupape (28) et au moins un élément d'étanchéité (44) supporté à ressort sur le corps de soupape (28) forment une barrière à matières solides contre les matières solides présentes dans le débit volumétrique.

13. Circuit de chauffage et/ou de refroidissement d'un véhicule automobile, dans lequel un fluide réfrigérant, en particulier un fluide réfrigérant d'un moteur à combustion interne, peut circuler, comprenant au moins une soupape (131) selon au moins l'une quelconque des revendications 1 à 12.
